# EUROPEAN PATENT APPLICATION

(11) **EP 3 751 877 A1**
(43) Date of publication of application: **16.12.2020**
(21) Application number: 19305744.5
(22) Date of filing: 11.06.2019
(51) Int. Cl.: H04W 8/18, H04W 28/06

(54) **METHODS AND SYSTEMS FOR SUBSCRIBER IDENTIFIER SUBMISSION OVER 5G NETWORKS**

(71) Applicant: GEMALTO SA, 92190 Meudon (FR)
(72) Inventor: PHAN, Ly Thanh, 92190 Meudon (FR); DANY, Vincent, 92190 Meudon (FR); PAULIAC, Mireille, 92190 Meudon (FR); EL MAROUANI, Abdellah, 92190 Meudon (FR); BARRAS, Cyril, 92190 Meudon (FR)
(74) Representative: Lotaut, Yacine Diaw

(57) **Abstract**

A Universal Subscriber Identity Module (**1**) storing a first subscriber identifier having a byte length greater than a predefined first byte length threshold, the Universal Subscriber Identity Module (**1**) further storing a second subscriber identifier having a byte length equal to or less than a predefined second byte length threshold, said second byte length threshold being less than or equal to said first byte length threshold, said second subscriber identifier being determined by applying a predefined mapping function to said first subscriber identifier, the Universal Subscriber Identity Module (**1**) being configured to return, in response to an Identity Request message (**10**), a subscription identifier (**11**) including the second subscriber identifier, said predefined second byte length threshold being defined so that said subscription identifier (**11**) has a byte length less than or equal to a predefined third byte length threshold.

## Description

### FIELD OF THE INVENTION

The present invention pertains generally to identity presentation within 3GPP networks and more particularly to transmission load of identity submission over 5G networks.

### BACKGROUND OF THE INVENTION

To be able to uniquely identify a mobile subscriber, for examples for authentication, administration or billing purposes, an unique permanent identity is assigned by the network with which the subscriber is registered (called Home Network) to the subscriber's user equipment. This unique permanent identity generally refers to the International Mobile Subscriber Identity (IMSI) present in the Subscriber Identity Module (SIM) provided by the home network.

Such unique permanent identity has to be sent along with any service use request made by the user equipment to a serving network. Depending on the current location of the user equipment, the serving network may be the subscriber's home network or a visited network, namely when the user equipment is roaming.

Accordingly, the Subscriber Identity Module has to reveal its unique permanent identity over the air to the serving network, which is not free of privacy concerns. In fact, in addition to a reasonable mistrust of the serving network when the user is roaming, the radio link is vulnerable to serious attacks such as active or passive IMSI catching where data about movement or usage may be amassed leading to location tracking or profiling.

In this regard, 5G networks specifications allow, since release 15, subscription identity privacy. 5G technology also handles access to private 5G networks that may use Network Specific Identifier (NSI) to identify a subscriber. Such identifier, instead of being an IMSI, is actually a Network Access Identifier (NAI) as defined in RFC 7542 to be used for identity presentation. Therefore, when a Universal Subscriber Identity Module (USIM) tries to identify itself to a serving network, it uses the NSI as an alternative identifier to the IMSI.

More generally, privacy-sensitive identifiers alternative to IMSI (such as, the NSI) are stored in the USIM (3GPP TS 31.102 release 15) and used by this USIM for identity presentation. The USIM is, in fact, configured to calculate and submit, in response to a Get Identity command (as specified in 3GPP TS 31.102 and ETSI TS 102 221), an encrypted SUbscription Concealed Identifier (SUCI) (as specified in 3GPP TS 33.501) which includes the IMSI alternative identifier. In the prior art, this privacy subscription identifier SUCI is submitted in a single message. The maximal size of this single message is 255 bytes.

However, privacy-sensitive identifiers may be very long, leading to a calculated subscription identifier SUCI that cannot be provided in a single message. For example, NSI in NAI format, typically in human readable format, or in the form of a X509-like certificate, can be very long (theoretically up to 64K bytes according to the RFC 7542 or even longer in the case of a X509 certificate) so that corresponding calculated subscription identifier SUCI is longer than 255 bytes and, therefore, cannot be submitted in a single message.

In this regard, a chaining mechanism of the response packets according to ISO standards can be contemplated. However, the current command "Get Identity" as defined in 3GPP TS 31.102 release 15 does not allow such chaining of the response when such response is longer than 255 bytes. Moreover, such chaining may be not supported by release 15 terminal.

Yet another problem is that an identity presentation/submission in a plurality of messages introduces a transmission load subject to various drawbacks and disadvantages. In fact, the calculation and the submission in a plurality of messages of a long subscription identifier SUCI would obviously consume more battery resources, overload the limited computing power of the USIM (notably, the encryption step), and increase its response time. In the case of a subscription identifier SUCI designed for one-time use, the above limitations accumulate upon each call of the Get Identity command.

Another problem arises with regard to the transmission load of a subscription identifier SUCI including a long identifier which would consume more radio, memory and energy resources.

One object of the present invention is to address the above-noted and other problems.

Another object of the present invention is to provide backward compatibility with terminals which are compliant with the specifications of 3GPP TS 31.102 release 15, namely those unable to handle long subscription identifier SUCI.

Another object of the present invention is to reduce resource consumption when performing subscription identifier SUCI calculation by the USIM, while preserving subscription identity privacy.

Another object of the present invention is to enable an USIM to handle a privacy-sensitive identifier having a byte length longer than a predefined byte length and intended to be used in response to a Get Identity request.

Another object of the present invention is to reduce the transmission load of USIM response to an Identity Request message.

Another object of the present invention is to promote subscriber's identity privacy while saving identity submission load when subscription identifier SUCI calculation is performed by the USIM.

Another object of the present invention is to strengthen identity privacy in cellular networks and to promote interoperability among them.

Another object of the present invention is to promote widespread use of NSI, for example in NAI format, with no restriction on its size.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of the various embodiments. It is not intended to identify key of critical elements or to delineate the scope of these various embodiments. Its sole purpose is to present some concepts in a simplified form as a prelude to the more detailed description that is discussed later.

Various embodiments relate to a Universal Subscriber Identity Module storing a first subscriber identifier having a byte length greater than a predefined first byte length threshold, the Universal Subscriber Identity Module further storing a second subscriber identifier having a byte length equal or less than a predefined second byte length threshold, said second byte length threshold being less than or equal to said first byte length threshold, said second subscriber identifier being determined by applying a predefined mapping function to said first subscriber identifier, the Universal Subscriber Identity Module being configured to return, in response to an Identity Request message, a subscription identifier including the second subscriber identifier, said predefined second byte length threshold being defined so that said subscription identifier has a byte length less than or equal to a predefined third byte length threshold.

Various embodiments relate to methods for responding by a Universal Subscriber Identity Module to an Identity Request message, comprising the following steps:
- storing in the Universal Subscriber Identity Module a first subscriber identifier having a byte length greater than a predefined first byte length threshold;
- determining a second subscriber identifier by applying a predefined mapping function to the first subscriber identifier, the second subscriber identifier having a byte length equal or less than a predefined second byte length threshold, said second byte length threshold being less than or equal to said first byte length threshold,
- in response to the Identity Request message, returning by the Universal Subscriber Identity Module a subscription identifier including the second subscriber identifier, said predefined second byte length threshold being defined so that said subscription identifier has a byte length less than or equal to a predefined third byte length threshold.

In accordance with a broad aspect, the first subscriber identifier is a Network Specific Identifier.

In accordance with another broad aspect, the first subscriber identifier is in a Network Access Identifier format.

In accordance with another broad aspect, the mapping function is a hash function.

In accordance with another broad aspect, the first byte length threshold and the second byte length threshold are both equal to 240 bytes.

In accordance with another broad aspect, the third byte length threshold is 255 bytes.

In accordance with another broad aspect, the above Universal Subscriber Identity Module is associated with a home network, the mapping function being shared between said Universal Subscriber Identity Module and the said home network.

In accordance with another broad aspect, the first subscriber identifier is an email address, a pseudonym, or a X509 certificate.

Various embodiments relate to a computer program product implemented on a Universal Subscriber Identity Module, the program including code sections for performing instructions corresponding to the steps of the above methods.

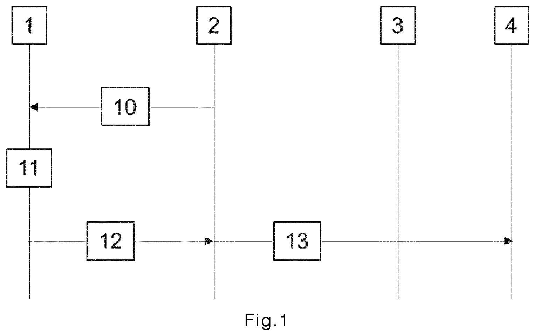

While the various embodiments are susceptible to various modification and alternative forms, specific embodiments thereof have been shown by way of example in the drawing. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

The objects, advantages and other features of the present invention will become more apparent from the following disclosure and claims. The following non-restrictive description of preferred embodiments is given for the purpose of exemplification only with reference to the accompanying sole Figure, which is a block diagram illustrating identity submission over 5G networks according to various embodiments.

### DETAILED DESCRIPTION OF ILLUSTRATIVE EMBODIMENTS

With reference to the sole figure, there is shown a USIM **1** (or, a USIM application **1**), a mobile equipment **2**, a serving network **3** and a home network **4**.

The USIM **1**, that a subscriber owns, is registered with the home network **4** and configured to enable the mobile equipment **2**, when it is inserted therein, to authenticate to the serving network **3**.

The USIM **1** is configured to be connected to the mobile equipment **2** through a removable Universal Integrated Circuit Card (UICC) or, more generally, through any appropriate USIM interface.

The mobile equipment **2** is a battery-powered mobile device. This mobile equipment **2** includes a rechargeable battery configured to provide electrical power required for the functioning of the USIM **1**.

The serving network **3** may be the subscriber's home network **4**, i.e. the network of the subscriber's provider, or the network of another provider i.e. a visited network (roaming). When the serving network **3** is the home network **4** of the subscriber, then references to serving network are to be interpreted as to home network.

The USIM **1** stores a first subscriber identifier having a byte length (i.e. a byte count length, a byte size, or simply a length) greater than a predefined first byte length threshold. This first subscriber identifier is called below "long identifier".

By long identifier is meant broadly and not restrictively, to include any identifier or, more generally, any information (such as a certificate) permitting an unambiguous identification of the subscriber and having a byte size longer than the said first byte length threshold.

In one embodiment, this long identifier assigned or belonging to the USIM **1** is globally unique. This long identifier is defined by the home network **4** and identifiable only by this home network **4**.

The long identifier may be entered by the user through the mobile equipment **2** or provisioned in the USIM **1** by the operator of the home network **4** at personalization of the subscription, or by an OTA (over-the-air) server.

In one embodiment, a memory store is available on the USIM **1** to facilitate the storage of the long identifier. For instance, the USIM **1** comprises an Elementary File (EF) including the long identifier. The USIM **1** may further store other information such as a Personal Identification Number (PIN), ciphering information and/or information related to the home network **4**.

The long identifier may be permanent or changing (i.e. a temporary or short-lived identifier). In an embodiment, this long identifier is of variable byte length which is longer than the first byte length threshold. The long identifier may be in a human readable format such as an email address or a pseudonym. The long identifier may include Unicode, ASCII, or extended ASCII characters, and/or any other unit of data.

In one embodiment, the long identifier is in a Network Access Identifier (NAI) format (as defined in RFC 7542). In another embodiment, the long subscriber identifier is a certificate, such as a X509 certificate (as defined in RFC 5280) or a X509-like certificate.

The long identifier is, in an embodiment, a Network Specific Identifier (NSI) for private networks. An elementary file storing this NSI (EF_{NSI}) resides within the USIM **1**.

In one embodiment, the long identifier is a NSI in a NAI format. Accordingly, the USIM **1** stores in an Elementary File the Network Specific Identifier in Network Access Identifier format (EF_{NSI}).

This NSI in NAI format may be in human readable format and of several kilobytes long. According to the RFC 7542, the byte length of a NSI in NAI format can theoretically up to 64K bytes. It can also be a X509 certificate which is several kilo bytes longer.

In one embodiment, the NSI-like long identifier is in the form of an email address (e.g. firstname.lastname@example.com). The user portion of this long identifier may be, as what is commonly used in email address, of any length, notably greater than the predefined first byte length threshold. In a variant, the NSI-like long identifier is an alphanumeric pseudonym having a byte size greater than the first byte length threshold.

While an NSI in NAI format is proposed herein, it should be noted that the NSI may be of any format having a byte length longer than the predefined first byte length threshold. The long identifier may be of any protocol-specific format, only the byte length of such subscriber identifier with respect to the first byte length threshold being here considered.

In an embodiment, the USIM **1** stores a plurality of long identifiers, each one of them having a byte length greater than the predefined first byte length threshold.

The USIM **1** further stores a second subscriber identifier having a byte length equal or less than a predefined second byte length threshold. This second subscriber identifier is called below "short identifier".

In an embodiment, the predefined second byte length threshold is equal or less than the predefined first byte length threshold.

In another embodiment, the short identifier has a byte length which lies between a predefined given byte length threshold and the predefined first byte length threshold, the predefined given byte length threshold being less than the predetermined first byte length threshold.

The short identifier identifies the specific USIM 1 within the home network **4**.This short identifier is globally unique at least within the home network **4** database. This short Identifier may be provisioned in the USIM **1** when it is procured by a subscriber, or later via OTA server, or computed by the USIM **1**. The short identifier may be computed once by the USIM **1**.

In one embodiment, the short identifier is of fixed byte length or variable byte length which is equal or less than the predefined second byte length threshold.

The long identifier and the short identifier are linked. The short identifier is a shortened or compressed version of the long identifier. To that end, a predefined mapping function maps the long identifier to the short identifier.

In one embodiment, the short identifier is derived from the long identifier. For example, the short identifier is determined from a look-up table linking long identifiers to short identifiers.

In one embodiment, the home network **4** assigns to the USIM **1** a short identifier derived from the long identifier in accordance with an internal mapping function. In another embodiment, the USIM **1** is configured to map the long identifier to a short identifier to which this USIM **1** is coupled.

In an embodiment, the USIM **1** uses the long identifier as an input to a hash function or to a compression algorithm (e.g. ZIP) for obtaining the short identifier. This hash function maps the long identifier (long variable-length identifier) to the short identifier of a predefined byte length (short fixed-length identifier). The short identifier is determined by applying the mapping function to the long identifier.

The hashing function may be location dependent, i.e. a hashing function per location area. For example, when the mobile equipment **2** moves from one area to another, it initiates a location update procedure, which should provide the USIM **1** with a new hashing function.

The hash function, or more generally the mapping function, is internal to the home network **4** and may vary from one USIM **1** to another, or from a group of USIM **1** to another. The hash function may be stored in the USIM **1** and associated to the IMSI or the card serial number of the target USIM **1**. The USIM supplier and the home network operator may agree on the method of generating and storing or not the hashing function in the USIM **1**.

In one embodiment, in order to enhance user privacy, a plurality of long identifiers may be considered for one subscriber. These long identifiers may include multiple identifier formats of the same or different lengths. The USIM **1** selects a long identifier and inputs this selected long identifier to a hash function to obtain a short identifier. These long identifiers may be changed over time, in order to make user tracking even more difficult.

The USIM **1** supports the Get Identity command (as specified in 3GPP TS 31.102 and ETSI TS 102 221). This command is used by the mobile equipment **2** to retrieve the encrypted SUbscription Concealed Identifier (SUCI) (as specified in 3GPP TS 33.501) computed by the USIM **1** and to deliver it to the serving network **3** each time it is requested.

In fact, when the USIM **1** is requested to present/submit its identity, the Get Identity command returns the privacy subscription identifier SUCI calculated by the USIM application **1**.

For calculating a SUCI that can be communicated, in response to an Identity Request message **10**, in only one Identity Response message **12** to the mobile equipment **2**, the USIM **1** uses the short identifier instead of the long identifier. In other words, when the subscription identifier SUCI calculation is to be performed by the USIM **1**, the USIM **1** calculates, in response to the Identity Request message **10** (Get identity command), a subscription identifier SUCI **11** using the short identifier and not the long identifier. For the execution of the Get Identity command (i.e. calculating the SUCI **11**), other information such as the home network identifier and the home network public key identifier needed for network routing and protection scheme protection usage may also be used by the USIM **1**.

In one embodiment, the calculated subscription identifier SUCI **11** includes the short identifier ciphered by the home network public key.

Accordingly, the short identifier is used by the USIM **1** instead of the long identifier to calculate the subscription identifier SUCI **11** in response to an incoming Identity Request message **10**. The generated subscription identifier SUCI **11** is a privacy preserving identifier containing the short identifier which is a compression of the long identifier.

In an illustrative embodiment, the long identifier is a NSI. The USIM **1** translates this NSI into a short identifier that uses for identity presentation. Thus, in response to an Identity Request message **10** from the mobile equipment **2**, the USIM **1** returns an Identity Response message **12** including the short identifier.

This subscription identifier SUCI **11** is transmitted to the ME in one single Identity Response message **12**, i.e. an Identity Response message of size lower than a predefined third byte length threshold (namely, 255 bytes) so that avoiding to perform a chaining of the response.

The predefined second byte length threshold is defined so that the byte length of the generated subscription identifier SUCI **11** is less than or equal to a predefined third byte length threshold (i.e. 255 bytes), and can therefore be communicated to the mobile equipment **2** in a single Identity Response message **12**. Indeed, the mapping function is intended to compress the long identifier into a short identifier whose use in SUCI calculation leads to a subscription identifier SUCI **11** which can be submitted in only one Identity Response message **12**.

The calculated subscription identifier SUCI **11** on the basis of the short identifier instead of the long identifier has no requirements on communication protocol of the mobile equipment **2** with USIM **1**.

Depending on the translation/mapping function parameter, the short identifier may be different from one received Identity Request message **10** to another. For example, this function may depend on the serving network, the requested service type, the time of the identity request, the identity request number (in a loop form for example). While defining the mapping function, the following conditions may be ensured: the calculated subscription identifier SUCI **11** may be transmitted to the mobile equipment **2** in only one Identity Response message **12** and the short identifier is identifiable by only the home network **4**.

In one embodiment, said first byte length threshold and second byte length threshold are both equal to 240 bytes. In another embodiment, the first byte length threshold may be set to any value greater than 230 bytes, 235 bytes, 240 bytes, 245 bytes, 250 bytes or any value in the range 230 - 250 bytes, this first byte length threshold being equal to or greater than the second byte length threshold. The second byte length threshold may be set to any value less than or equal to 230 bytes, 235 bytes, 240 bytes, 245 bytes, 250 bytes or any value in the range 230 - 250 bytes, this second byte length threshold being less than or equal to the first byte length threshold. More generally, the second byte length threshold can be set to any subscriber identifier byte length leading to a subscription identifier SUCI **11** having a byte length less than or equal to the predefined third byte length threshold. Similarly, the first byte length threshold can be set to any subscriber identifier byte length leading to a subscription identifier SUCI having a byte length greater than the predefined third byte length threshold. The predefined third byte length threshold is, in one embodiment, equal to 255 bytes so that the calculated subscription identifier SUCI **11** can be submitted to the mobile equipment **2** in a single message **12**.

The mobile equipment **2** receives, from the USIM **1**, the Identity Response message **12** that transfers in a Registration Request message **13** to the serving network **3**. The Identity Response message **12** is included by the mobile equipment **2** in a Registration Request message **13** (Register(SUCI)) which is transmitted to the serving network **3**.

Accordingly, the calculated subscription identifier SUCI **11** is submitted by the mobile equipment **2** in a Registration Request message **13** to the serving network **3** to initiate an authentication procedure.

The serving network **3** presents (or routes), as it is specified by 3GPP standards, the received subscription identifier SUCI to the home network **4** so as to obtain relevant authentication data.

Advantageously, the short identifier included in the subscription identifier SUCI **11** is handled, at least partially, as opaque data when processed by intermediate network nodes that are not a part of the home network **4**. Consequently, when it is different from the home network **4**, the serving network **3** is to be considered trustworthy, as it is unable to decipher the whole content of the received SUCI, promoting by the way interoperability.

When the submitted subscription identifier SUCI **11** is received by the home network **4**, this home network **4** interprets the short identifier and consequently identifies the subscriber and generates key/subscription data relating to this subscriber. The home network **4** deciphers the short identifier from the received subscription identifier SUCI, retrieves subscription information including the subscription credentials based on the deciphered short identifier, and performs the remaining steps of the ongoing registration process as specified in 3GPP standards (3GPP TS 33.501). As it is specified by 3GPP, the processing performed by the home network **4** may involves various functions such as the Unified Data Management (UDM) function, the AUthentication Function (AUSF), the Subscription identifier de-concealing function (SIDF), and/or the Unified Data Repository (UDR) function.

In this regards, the USIM **1** shares the mapping function with the UDM of the home network **4**. In one embodiment, the home network UDM maintains a back-mapping function so that it can resolve the short identifier back to the long identifier. For example, if the short identifier is the result of a compression of a Network Specific Identifier, then the home network **4** performs the expansion of the short identifier into the complete Network Specific Identifier. In another embodiment, the home network **4** stores relation information allowing to map short identifier to an internal key/subscription information.

Advantageously, the above optimized responding methods by USIM **1** to an Identity Request message and submission methods over 5G networks of subscription identifier including subscriber identifier,
- are transparent to the serving network **3** in that each home network **4** may use its own internal mapping functions (namely, compression/expansion methods) from long identifier to short identifier and vice versa independently from the serving network **3** and with no impact on their functioning. Therefore, the home network **4** can implement the above described embodiments without needing any modification in the serving network **3** or in the mobile equipment **2**. The above-described embodiments only requires limited changes to the USIM **1** and to the UDM of the home network **4**, both of which are under control of the home network operator;
- by submitting the SUCI in one message instead of a plurality of messages, reduce USIM **1** activity (computation and communication of the SUCI) and consequently its power consumption so that the electric power of mobile equipment **2** battery can be saved;
- improves USIM **1** response time to Get Identity request, the computation time of the SUCI according to the above described embodiments being reduced;
- promote subscriber's identity privacy through vulnerable wireless link and through intermediate networks, while minimizing the impact on existing signaling mechanisms/protocols;
- are compatible with legacy mobile equipment **2** (including Release 15 terminals) and with current mobile standards;
- reduce radio resource traffic specially in case of loT devices.

## Claims

1. A Universal Subscriber Identity Module (**1**) storing a first subscriber identifier having a byte length greater than a predefined first byte length threshold, the Universal Subscriber Identity Module (**1**) further storing a second subscriber identifier having a byte length equal or less than a predefined second byte length threshold, said second byte length threshold being less than or equal to said first byte length threshold, said second subscriber identifier being determined by applying a predefined mapping function to said first subscriber identifier, the Universal Subscriber Identity Module (**1**) being configured to return, in response to an Identity Request message (**10**), a subscription identifier (**11**) including the second subscriber identifier, said predefined second byte length threshold being defined so that said subscription identifier (**11**) has a byte length less than or equal to a predefined third byte length threshold.

2. The Universal Subscriber Identity Module (**1**) of claim 1, wherein the first subscriber identifier is a Network Specific Identifier.

3. The Universal Subscriber Identity Module (**1**) of claim 1 or 2, wherein the first subscriber identifier is in a Network Access Identifier format.

4. The Universal Subscriber Identity Module (**1**) of any of the preceding claims, wherein the mapping function is a hash function.

5. The Universal Subscriber Identity Module (**1**) of any of the preceding claims, wherein the first byte length threshold and the second byte length threshold are both equal to 240 bytes.

6. The Universal Subscriber Identity Module (**1**) of any of the preceding claims, wherein the third byte length threshold is 255 bytes.

7. The Universal Subscriber Identity Module (**1**) of any of the preceding claims, wherein it is associated with a home network (**4**), the mapping function being shared between said Universal Subscriber Identity Module (**1**) and the said home network (**4**).

8. The Universal Subscriber Identity Module (**1**) of any of the preceding claims, wherein the first subscriber identifier is an email address or a pseudonym.

9. The Universal Subscriber Identity Module (**1**) of any of claims 1 to 7, wherein the first subscriber identifier is a X509 certificate.

10. A method for responding by a Universal Subscriber Identity Module (**1**) to an Identity Request message, comprising the following steps:
- storing in the Universal Subscriber Identity Module (**1**) a first subscriber identifier having a byte length greater than a predefined first byte length threshold;
- determining a second subscriber identifier by applying a predefined mapping function to the first subscriber identifier, the second subscriber identifier having a byte length equal or less than a predefined second byte length threshold, said second byte length threshold being less than or equal to said first byte length threshold,
- in response to the Identity Request message, returning by the Universal Subscriber Identity Module (**1**) a subscription identifier (**11**) including the second subscriber identifier, said predefined second byte length threshold being defined so that said subscription identifier (**11**) has a byte length less than or equal to a predefined third byte length threshold.

11. The method of the preceding claim, wherein the first subscriber identifier is a Network Specific Identifier.

12. The method of claim 10 or 11, wherein the first subscriber identifier is in a Network Access Identifier format.

13. The method of any of claims 10 to 12, wherein the mapping function is a hash function.

14. The method of any of claims 10 to 13, wherein the first subscriber identifier is a X509 certificate, an email address or a pseudonym.

15. A computer program product implemented on a Universal Subscriber Identity Module (**1**), the program including code sections for performing instructions corresponding to the steps of a method according to any of claims 10 to 14.
